# EUROPEAN PATENT APPLICATION

(11) **EP 4 686 275 A1**
(43) Date of publication of application: **28.01.2026**
(21) Application number: 24803680.8
(22) Date of filing: 07.05.2024
(51) Int. Cl.: H04W 56/00, H04W 48/10, H04W 76/27

(54) **METHOD AND APPARATUS FOR TRANSMITTING CLOCK QUALITY INFORMATION IN WIRELESS COMMUNICATION SYSTEM**

(30) Priority: 11.05.2023 KR 20230060986; 11.08.2023 KR 20230105524
(71) Applicant: Samsung Electronics Co., Ltd., Suwon-si, Gyeonggi-do 16677 (KR)
(72) Inventor: BAEK, Sangkyu, Suwon-si Gyeonggi-do 16677 (KR)
(74) Representative: Nederlandsch Octrooibureau
(86) International application number: PCT/KR2024/006115
(87) International publication number: WO 2024/232627

(57) **Abstract**

The present disclosure relates to a 5G or 6G communication system for supporting a higher data transmission rate. A user equipment (UE) in a wireless communication system, according to one embodiment of the present disclosure, comprises: a transceiver, and a controller coupled to the transceiver. The controller is configured to: receive, from a base station, a radio resource control (RRC) message including a first event identifier (ID) and information on a clock quality; store the first event ID; and receive a system information block (SIB) including a second event ID from the base station, wherein the first event ID and the second event ID are associated with a timing synchronization status of the UE.

## Description

### [Technical Field]

The disclosure relates to operation of a user equipment (UE) and a base station in a wireless communication system and, more particularly, to a method and apparatus for transmitting clock quality information.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz (THz) bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 preprocessing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end Al support functions, and next-generation distributed computing technology for implementing services at levels of complexity exceeding the limit of UE operation capability by utilizing ultra-high-performance communication and computing resources.

### [Disclosure of Invention]

### [Technical Problem]

Embodiments set forth herein are to provide an apparatus and a method capable of effectively providing services in a mobile communication system.

### [Solution to Problem]

In accordance with an aspect of the disclosure, a method of processing a control signal in a wireless communication system may include receiving a first control signal transmitted from a base station, processing the received first control signal, and transmitting, to the base station, a second control signal generated based on the processing.

### [Advantageous Effects of Invention]

Embodiments set forth herein provide an apparatus and a method capable of effectively providing services in a mobile communication system.

### [Brief Description of Drawings]

FIG. 1 is a diagram illustrating a scheme of transferring clock quality information to a user equipment (UE) in a connected mode according to an embodiment of the disclosure.
FIG. 2 is a diagram illustrating a scheme of transferring timing synchronization status information to a UE in an idle mode or inactive mode according to an embodiment of the disclosure.
FIG. 3 is a diagram illustrating a scheme of transferring timing synchronization status information and clock quality information to a UE in an idle mode or inactive mode according to an embodiment of the disclosure.
FIG. 4 is a diagram illustrating a scheme of transferring timing synchronization status information and cell-common clock quality information to a UE in an idle mode or inactive mode according to an embodiment of the disclosure.
FIG. 5 illustrates a structure of a base station according to an embodiment of the disclosure.
FIG. 6 illustrates a structure of a UE according to an embodiment of the disclosure.

### [Mode for the Invention]

In describing the disclosure below, a detailed description of known functions or configurations will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification. Hereinafter, embodiments of the disclosure will be described with reference to the accompanying drawings.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

In describing the disclosure below, a detailed description of known functions or configurations incorporated herein will be omitted when it is determined that the description may make the subject matter of the disclosure unnecessarily unclear. Hereinafter, embodiments of the disclosure will be described with reference to the accompanying drawings.

In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as described below, and other terms referring to subjects having equivalent technical meanings may also be used.

In the following description, the terms "physical channel" and "signal" may be interchangeably used with the term "data" or "control signal". For example, the term "physical downlink shared channel (PDSCH)" refers to a physical channel over which data is transmitted, but the PDSCH may also be used to refer to the "data". That is, in the disclosure, the expression "transmit ting a physical channel" may be construed as having the same meaning as the expression "transmitting data or a signal over a physical channel".

In the following description of the disclosure, higher signaling refers to a signal transfer scheme from a base station to a terminal via a downlink data channel of a physical layer, or from a terminal to a base station via an uplink data channel of a physical layer. The higher signaling may also be understood as radio resource control (RRC) signaling or a media access control (MAC) control element (CE).

In the following description of the disclosure, terms and names defined in the 3rd generation partnership project new radio (3GPP NR) or 3GPP long term evolution (3GPP LTE) standards will be used for the sake of descriptive convenience. However, the disclosure is not limited by these terms and names, and may be applied in the same way to systems that conform other standards. In the disclosure, the term "gNB" may be interchangeably used with the term "eNB" for the sake of descriptive convenience. That is, a base station described as "eNB" may refer to "gNB". Furthermore, the term "terminal" may refer to not only a mobile phone, an MTC device, an NB-IoT device, and a sensor, but also other wireless communication devices.

In the following description, a base station is an entity that allocates resources to terminals, and may be at least one of a gNode B (gNB), an eNode B (eNB), a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function. Of course, examples of the base station and the terminal are not limited to those mentioned above.

In particular, the disclosure may be applied to 3GPP NR (5th generation mobile communication standard). In addition, the disclosure may be applied to intelligent services (e.g., smart homes, smart buildings, smart cities, smart cars or connected cars, healthcare, digital education, retail business, security and safety-related services, etc.) on the basis of 5G communication technology and IoT-related technology. In the disclosure, the term "eNB" may be interchangeably used with the term "gNB" for the sake of descriptive convenience. That is, a base station described as "eNB" may refer to "gNB". In addition, the term "terminal" may refer to not only mobile phones, NB-IoT devices, and sensors, but also any other wireless communication devices.

A wireless communication system is advancing to a broadband wireless communication system for providing high-speed and high-quality packet data services using communication standards, such as high-speed packet access (HSPA) of 3GPP, LTE (long-term evolution or evolved universal terrestrial radio access (E-UTRA)), LTE-Advanced (LTE-A), LTE-Pro, high-rate packet data (HRPD) of 3GPP2, ultra-mobile broadband (UMB), IEEE 802.16e, and the like, as well as typical voice-based services.

As a typical example of the broadband wireless communication system, an LTE system employs an orthogonal frequency division multiplexing (OFDM) scheme in a downlink (DL) and employs a single carrier frequency division multiple access (SC-FDMA) scheme in an uplink (UL). The uplink refers to a radio link via which a user equipment (UE) or a mobile station (MS) transmits data or control signals to a base station (BS) (or eNode B), and the downlink refers to a radio link via which the base station transmits data or control signals to the UE. The above multiple access scheme separates data or control information of respective users by allocating and operating time-frequency resources for transmitting the data or control information for each user so as to avoid overlapping each other, that is, so as to establish orthogonality.

Since a 5G communication system, which is a post-LTE communication system, must freely reflect various requirements of users, service providers, and the like, services satisfying various requirements must be supported. The services considered in the 5G communication system include enhanced mobile broadband (eMBB) communication, massive machine-type communication (mMTC), ultra-reliability low-latency communication (URLLC), and the like.

According to some embodiments, eMBB may aim at providing a data rate higher than that supported by existing LTE, LTE-A, or LTE-Pro. For example, in the 5G communication system, eMBB must provide a peak data rate of 20 Gbps in the downlink and a peak data rate of 10 Gbps in the uplink for a single base station. Furthermore, the 5G communication system must provide an increased user-perceived data rate to the UE, as well as the maximum data rate. In order to satisfy such requirements, transmission/reception technologies including a further enhanced multi-input multi-output (MIMO) transmission technique may be required to be improved. In addition, the data rate required for the 5G communication system may be obtained using a frequency bandwidth more than 20 MHz in a frequency band of 3 to 6 GHz or 6 GHz or more, instead of transmitting signals using a transmission bandwidth up to 20 MHz in a band of 2 GHz used in LTE.

In addition, mMTC is being considered to support application services such as the Internet of Things (IoT) in the 5G communication system. mMTC may have requirements, such as support of connection of a large number of UEs in a cell, enhancement coverage of UEs, improved battery time, a reduction in the cost of a UE, and the like, in order to effectively provide the Internet of Things. Since the Internet of Things provides communication functions while being provided to various sensors and various devices, it must support a large number of UEs (e.g., 1,000,000 UEs/km²) in a cell. In addition, the UEs supporting mMTC may require wider coverage than those of other services provided by the 5G communication system because the UEs are likely to be located in a shadow area, such as a basement of a building, which is not covered by the cell due to the nature of the service. The UE supporting mMTC must be configured to be inexpensive, and may require a very long battery life-time such as 10 to 15 years because it is difficult to frequently replace the battery of the UE.

Lastly, URLLC, which is a cellular-based mission-critical wireless communication service, may be used for remote control for robots or machines, industrial automation, unmanned aerial vehicles, remote health care, emergency alert, and the like. Thus, URLLC must provide communication with ultra-low latency and ultra-high reliability. For example, a service supporting URLLC must satisfy an air interface latency of less than 0.5 millisecond, and may also require a packet error rate of 10⁻⁵ or less. Therefore, for the services supporting URLLC, a 5G system must provide a transmit time interval (TTI) shorter than those of other services, and also may require a design for assigning a large number of resources in a frequency band in order to secure reliability of a communication link.

The above-described three services considered in the 5G communication system, that is, eMBB, URLLC, and mMTC, may be multiplexed and transmitted in a single system. In this case, different transmission/reception techniques and transmission/reception parameters may be used between services in order to satisfy different requirements of the respective services. Therefore, for the services supporting URLLC, a 5G system must provide a transmit time interval (TTI) shorter than those of other services, and also may require a design for assigning a large number of resources in a frequency band in order to secure reliability of a communication link.

Furthermore, in the following description of embodiments of the disclosure, LTE, LTE-A, LTE Pro, or 5G (or NR, next-generation mobile communication) systems will be described by way of example, but the embodiments of the disclosure may also be applied to other communication systems having similar backgrounds or channel types. In addition, based on determinations by those skilled in the art, the embodiments of the disclosure may be applied to other communication systems through some modifications without significantly departing from the scope of the disclosure.

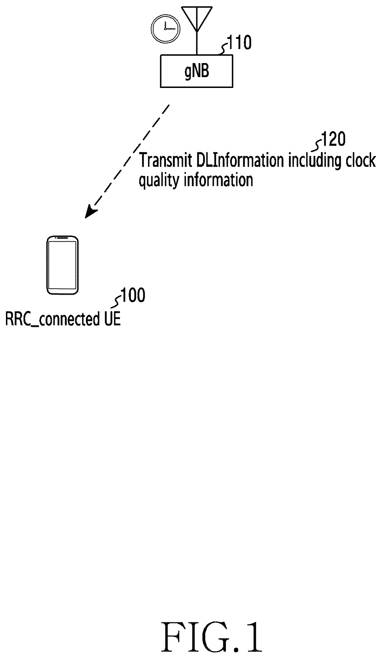

FIG. 1 is a diagram illustrating a scheme of transferring clock quality information to a user equipment (UE) in a connected mode according to an embodiment of the disclosure.

For ultra reliable and low latency communications (URLLC) communication that requires high data stability and short latency, time synchronization may be important in the communication system. To this end, a UE 100 in a wireless communication system may maintain time synchronization with a base station 110 and the communication system connected to the base station. The base station 110 may accurately inform the UE 100 in the base station's coverage area of time information used in the communication system. According to an embodiment of the disclosure, time information may be time information that is based on a frame boundary point corresponding to a predetermined system frame number (SFN). The time information is not limited to the example, and the type and standard of time information are not limited to the example.

According to an embodiment of the disclosure, time information may be transmitted to a UE in an RRC connected mode (RRC_CONNECTED) via a DLInformationTransfer message according to a unicast scheme, or may be transmitted to all UEs in a corresponding base station's coverage area via a system information block (SIB) according to a broadcast scheme. The embodiment of FIG. 1 illustrates that time information is transmitted to a UE in a connected mode via a DLInformationTransfer message according to a unicast scheme.

In addition, according to an embodiment of the disclosure, quality of transmitted time information, that is, clock quality information, is included in a DLInformationTransfer message as shown in reference numeral 120, and may be transferred from the base station 110 to the UE 100.

According to an embodiment of the disclosure, the clock quality information refers to the quality of time information that a communication system is capable of providing to a UE, and the same clock quality information may be provided to or configured for one or more UEs in the communication system. According to an embodiment of the disclosure, the clock quality information may include at least one of clock accuracy, a coordinated universal time (UTC) or global navigation satellite system (GNSS) satellite time trace function, frequency reliability, a parent time source, a synchronization state, an acceptable/not acceptable indicator indicating capability of satisfying time information requirements that a UE requires. However, the disclosure is not limited to the above-described example.

According to an embodiment of the disclosure, the above-described clock accuracy may be used as the same concept as a time error, and this may be configured with the following three elements.
- Element 1: information related to uncertainty of a time provided by reference time information (ReferenceTimeInfo).
- Element 2: information related to a quantization error of propagation delay compensation (PDC) between a base station and a UE.
- Element 3: information related to an error (refresh error) occurring due to a change of a distance or a propagation path between a UE and a base station in an ReferenceTimeInfo transmission period.

The time accuracy included in the clock quality information may be a value determined by a sum of errors caused by the information (element 1) related to uncertainty of time information, the information (element 2) related to a quantization error of PDC, and the information (element 3) related to a refresh error. According to an embodiment of the disclosure, when the quantization error is included in the uncertainty of time information and is transmitted, the PDC quantization error may not be redundantly applied. When the UE 100 receives, from the base station 110, a value (or information) related to time accuracy providable to the UE, the UE 100 may transfer the value related to the time accuracy to an upper layer, and the upper layer may use the value related to the time accuracy. In this instance, the upper layer may be an application layer. However, the disclosure is not limited to the above-described example.

According to an embodiment of the disclosure, when the UE receives a time accuracy value, the UE may not use an uncertainty value (information related to uncertainty) included in ReferenceTimeInfo. According to an embodiment, when the UE receives the time accuracy value, the UE may perform an operation that disregards the uncertainty value.

According to an embodiment of the disclosure, the time accuracy included in the clock quality information may be a value determined by a sum of errors caused by the information (element 2) related to a quantization error of PDC and the information (element 3) related to a refresh error, excluding the information (element 1) related to uncertainty of time information. The information (element 1) related to uncertainty is transmitted via ReferenceTimeInfo and thus, redundant transmission is not needed. When the information related to the quantization error is included in the uncertainty of time information and is transmitted, the information related to the PDC quantization error may not be redundantly applied. When the UE receives, from the base station, time accuracy providable to the UE, the UE may obtain total time accuracy by combining the received uncertainty value (information related to uncertainty) and the time accuracy value, and may transfer the value of the total time accuracy to an upper layer to enable the upper layer to use the value. According to an embodiment, the UE may transfer the received uncertainty value and the time accuracy value to an upper layer so that the upper layer may use the received uncertainty value and the time accuracy value. In this instance, the upper layer may be an application layer.

According to an embodiment of the disclosure, the time accuracy included in the clock quality information may correspond each error caused by the information (element 1) related to uncertainty of time information, the information (element 2) related to a quantization error of PDC, the information (element 3) related to a refresh error, and the information corresponding to the elements 1 to 3 may be respectively transferred from the base station to the UE. Through the above, the UE may determine total time accuracy based on all the values of detailed elements that determine the time accuracy. When the quantization error is included in the uncertainty of time information and is transmitted, the PDC quantization error may not be redundantly applied. In this instance, the PDC quantization error may be configured to 0. When the UE receives, from the base station, the time accuracy providable to the UE, the UE may obtain total time accuracy by combining the received uncertainty value, the quantization error of the PDC, the refresh error value, and may transfer the value of the total time accuracy to an upper layer to enable the upper layer to use the value. According to an embodiment, the UE may transfer the received uncertainty value (information related to uncertainty), the PDC quantization error (information related to the PDC quantization error), a refresh error value (information related to the refresh error value) to an upper layer, so that the upper layer may use the received uncertainty value, the PDC quantization error, and the refresh error value. In this instance, the upper layer may be an application layer.

According to an embodiment of the disclosure, the time accuracy included in the clock quality information may be an error caused by the information (element 3) related to a refresh error, and the value may be transferred from the base station to the UE. In addition, an uncertainty value may be transferred separately, and it is assumed that the UE is capable of calculating a quantization error of PDC using a PDC error configured for the UE. Through the above, the UE may determine total time accuracy based on all values of detailed elements that determine the time accuracy. When the quantization error is included in the uncertainty of time information and is transmitted, the PDC quantization error may not be redundantly applied. In this instance, the PDC quantization error may be configured to 0. When the UE receives, from the base station, time accuracy providable to the UE, the UE may obtain total time accuracy by combining the received uncertainty value, the quantization error of PDC, the refresh error value, and may transfer the value of the total time accuracy to an upper layer to enable the upper layer to use the value. In some embodiments, the UE may transfer the received uncertainty value, the PDC quantization error, and the refresh error value to an upper layer so that the upper layer may use the received uncertainty value, the PDC quantization error, and the refresh error value. In this instance, the upper layer may be an application layer.

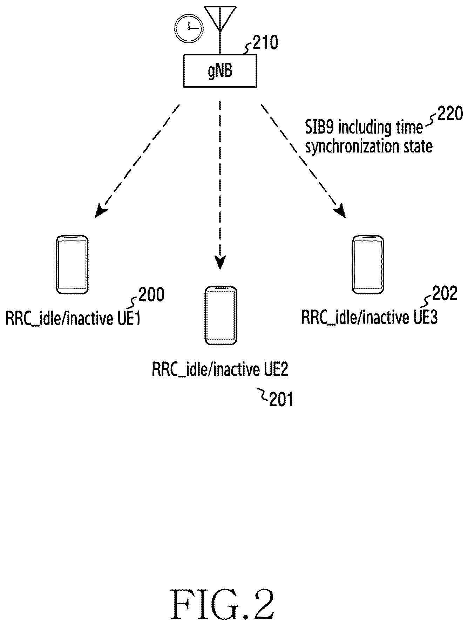

FIG. 2 is a diagram illustrating a scheme of transferring timing synchronization status information to a UE in an idle mode or inactive mode according to an embodiment of the disclosure.

In the case of a UE 200, 201, or 202 in an RRC idle mode (RRC_IDLE) or RRC inactive mode (RRC_INACTIVE), the UE hardly performs direct data transmission or reception, but when data transmission or reception corresponding to URLLC communication resumes at a later time, time synchronization with a base station 210 and a connected communication system may be needed. To this end, the base station may include timing synchronization status information in a system information block (SIB), specifically, in an SIB9 message that transmits time information, and may transmit the same as shown in reference numeral 220.

According to an embodiment of the disclosure, a timing synchronization status may be identified based on an event ID, and the event ID may be transmitted by being included in clock quality information transmitted via a DLInformationTransfer message transmitted when the UE is in an RRC connected mode. The SIB9 message may include an event ID and may be transmitted to the UE in the idle mode or inactive mode according to a broadcast scheme, and when the UE receives, via SIB9, an event ID different from a stored event ID value, the UE may inform an upper layer of the same or may perform an operation of shifting to an RRC connected mode.

According to an embodiment of the disclosure, the timing synchronization status may be identified based on an event ID, and the event ID may be transmitted by being included in an RRCRelease message indicating shifting of the UE from an RRC connected mode to an RRC idle mode or inactive mode. At a later time, the SIB9 message may include an event ID and may be transmitted to the UE in the idle mode or inactive mode according to a broadcast scheme, and when the UE receives, via SIB9, an event ID different from a stored event ID value, the UE may inform an upper layer of the same or may perform an operation of shifting to an RRC connected mode.

In addition, when a UE that stores an event ID value receives SIB9 that does not include an event ID, the UE may inform an upper layer of the same or may perform an operation of shifting to an RRC connected mode. According to an embodiment of the disclosure, when a UE that stores an event ID value performs cell reselection and SIB9 received from the reselected cell does not include an event ID, the UE may inform an upper layer that an event ID is not included or may perform an operation of shifting to an RRC connected mode.

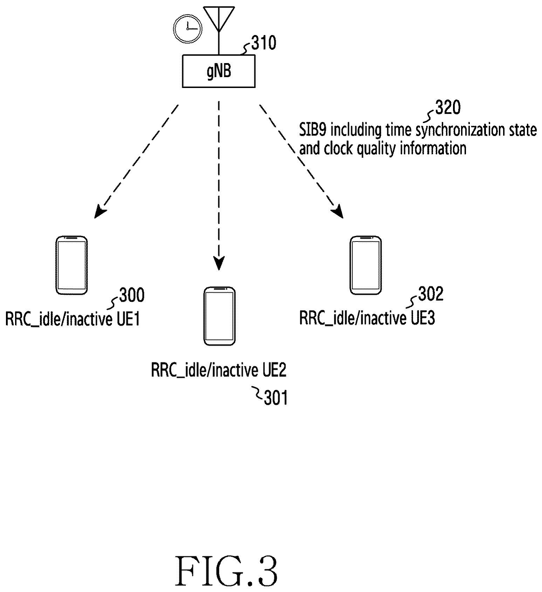

FIG. 3 is a diagram illustrating a scheme of transferring timing synchronization status information and clock quality information to a UE in an idle mode or inactive mode according to an embodiment of the disclosure.

In the case of a UE 300, 301, or 302 in an RRC idle mode (RRC_IDLE) or RRC inactive mode (RRC INACTIVE), the UE hardly performs direct data transmission or reception, but when data transmission or reception corresponding to URLLC communication resumes at a later time, time synchronization with a base station 310 and a connected communication system may be needed. To this end, the base station may include timing synchronization status information in a system information block (SIB), specifically, in an SIB9 message that transmits time information, and may transmit the same as shown in reference numeral 320.

According to an embodiment of the disclosure, a timing synchronization status may be identified based on an event ID, and the event ID may be transmitted by being included in clock quality information via a DLInformationTransfer message transmitted when the UE in an RRC connected mode. The SIB9 message may include an event ID and may be transmitted to the UE in the idle mode or inactive mode according to a broadcast scheme, and when the UE receives, via SIB9, an event ID different from a stored event ID value, the UE may inform an upper layer of the same or may perform an operation of shifting to an RRC connected mode.

In addition, in a connected mode, the UE may be configured with a clock quality ID by the base station. The clock quality ID may be configured in a DLInformationTransfer message, together with clock quality information. This may not be limited to the example, and the clock quality ID may be directly configured for the UE via an RRC reconfiguration message. Clock quality information that the communication system provides to a UE may be different for each UE, and thus the UE is configured with a clock quality ID, and may interpret clock quality information associated with the configured clock quality ID as clock quality information for the UE itself. When the clock quality information is transmitted together with timing synchronization status information in SIB9, the clock quality ID may be used for identifying whether the clock quality information is for the UE itself as shown in reference numeral 320. As the clock quality information transmitted in the SIB9, only clock quality information changed by the base station may be selectively transmitted. In this instance, the UE may regard, determine, or identify that clock quality information that is not transmitted via SIB9 is not changed.

When clock quality information included in SIB9 includes information associated with the clock quality ID of the UE, the UE may identify whether the clock quality information is changed and may transfer the same to an upper layer. According to an embodiment, the UE may perform transferring to an upper layer only when the clock quality information of the UE is changed. When the clock quality information included in SIB9 does not include information associated with the clock quality ID of the UE, the UE may identify whether an event ID value stored in the UE is identical to an event ID included in SIB9, and may transfer a change of the event ID value to an upper layer. According to another embodiment, when the clock quality information included in SIB9 does not include information associated with the clock quality ID of the UE, the UE may determine that clock quality information of the UE is not changed.

According to an embodiment, the clock quality ID may be transmitted by being included in an RRCRelease message indicating shifting of the UE from an RRC connected of mode to an RRC idle mode or inactive mode.

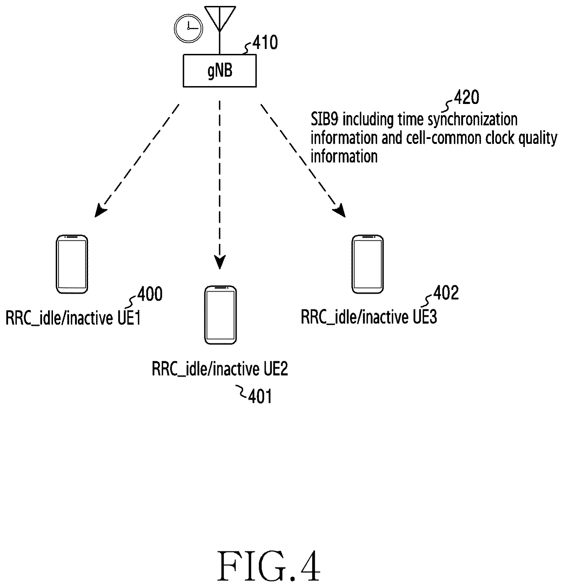

FIG. 4 is a diagram illustrating a scheme of transferring timing synchronization status information and cell-common clock quality information to a UE in an idle mode or inactive mode according to an embodiment of the disclosure.

In the case of a UE 400, 401, or 402 in an RRC idle mode (RRC_IDLE) or RRC inactive mode (RRC INACTIVE), the UE hardly performs direct data transmission or reception, but when data transmission or reception corresponding to URLLC communication resumes at a later time, time synchronization with a base station 410 and a connected communication system may be needed. To this end, the base station may include timing synchronization status information in a system information block (SIB), specifically, in an SIB9 message that transmits time information, and may transmit the same as shown in reference numeral 420.

According to an embodiment of the disclosure, a timing synchronization status may be identified based on an event ID, and the event ID may be transmitted by being included in clock quality information transmitted via a DLInformationTransfer message transmitted when the UE is in an RRC connected mode. The SIB9 message may include an event ID and may be transmitted to the UE in the idle mode or inactive mode according to a broadcast scheme, and when the UE receives, via SIB9, an event ID different from a stored event ID, the UE may inform an upper layer of the same or may perform an operation of shifting to an RRC connected mode.

The clock quality information provided by the base station may be common information within the base station. In this instance, it may be useful to transmit the clock quality information used in common within the base station together via the SIB9 in a broadcast scheme. When the clock quality information within the base station is transmitted according to the broadcast scheme, this may prevent UEs in the base station's coverage area from shifting to an RRC connected mode in order to receive clock quality information. According to an embodiment, the clock quality information that the base station is capable of providing to all UEs may be included in SIB9. That is, via SIB9, timing synchronization status information including an event ID and a clock quality information value used in common within the base station (cell) may be transmitted as shown in reference numeral 420. As the common clock quality information transmitted in the SIB9, only clock quality information changed by the base station may be selectively transmitted. In this instance, the UE may regard, determine, or identify that clock quality information that is not transmitted via SIB9 is not changed.

When the event ID included in SIB9 is changed and the common clock quality information is changed, the UE may transmit the corresponding information to an upper layer. According to another embodiment, when the UE is interest in predetermined clock quality information among the clock quality information, and the event ID included in SIB9 is changed and the value that the UE is interested in among the common clock quality information is changed, the UE may transmit the corresponding information to an upper layer.

In addition, according to another embodiment, when a part or all of the common clock quality information is included in SIB9, an event ID may not be included. In this instance, when the common clock quality information included in SIB9 is changed or the value that the UE is interested in is changed, the UE may transmit the corresponding information to an upper layer.

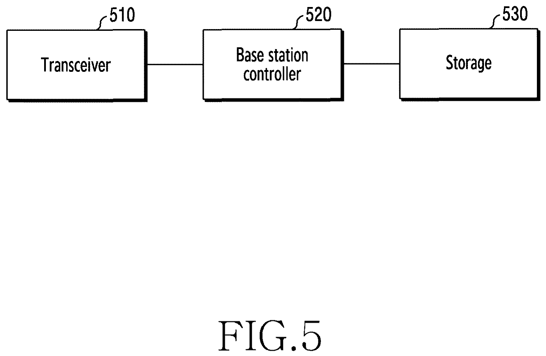

FIG. 5 illustrates a structure of a base station according to an embodiment of the disclosure.

Referring to FIG. 5, the base station may include a transceiver 510, a controller 520, and a storage 530. The transceiver 510, the controller 520, and the storage 530 may be operated according to the above-described communication methods of the base station. In addition, network devices may correspond to the structure of the base station. However, components of the base station are not limited to the above-described example. For example, the base station may include a larger or smaller number of components than the above-described components. Furthermore, the transceiver 510, the controller 520, and the storage 530 may be implemented in the form of a single chip.

The transceiver 510 refers to a base station receiver and a base station transmitter as a whole, and may transmit/receive signals with other network entities. The transmitted/received signals may include control information and data. The transceiver 510 may transmit, for example, system information, synchronization signals, or reference signals to UEs. To this end, the transceiver 510 may include an RF transmitter configured to up-convert and amplify the frequency of transmitted signals, an RF receiver configured to low-noise-amplify received signals and down-convert the frequency thereof, and the like. However, this is only an embodiment of the transceiver 510, and the components of the transceiver 510 are not limited to the RF transmitter and the RF receiver. The transceiver 510 may include wired/wireless transceivers, and may include various components for transmitting/receiving signals. In addition, the transceiver 510 may receive signals through a communication channel (e.g., a radio channel), output the same to the controller 520, and transmit signals output from the controller 520 through the communication channel. Furthermore, the transceiver 510 may receive communication signals, output same to a processor, and transmit signals output from the processor to UEs, other base stations, or other network entities through a wired/wireless network.

The storage 530 may store programs and data necessary for operations of the base station. In addition, the storage 530 may store control information or data included in signals acquired by the base station. The storage 530 may include storage media such as a ROM, a RAM, a hard disk, a CD-ROM, and a DVD, or a combination of storage media. In addition, the storage 530 may store at least one of information transmitted/received through the transceiver 510 and information generated through the controller 520.

As used herein, the controller 520 may be defined as a circuit, an application specific integrated circuit, or at least one processor. The processor may include a communication processor (CP) which performs control for communication and an application processor (AP) which controls upper layers such as application programs. The controller 520 may control the overall operation of the base station according to the embodiments proposed in the disclosure. For example, the controller 520 may control signal flows between the respective blocks to perform operations for transmitting clock quality information.

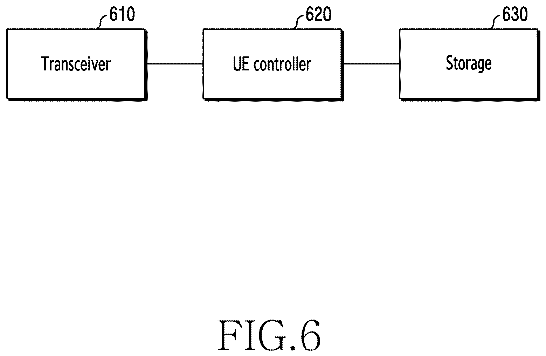

FIG. 6 illustrates a structure of a UE according to an embodiment of the disclosure.

Referring to FIG. 6, the UE may include a transceiver 610, a controller 620, and a storage 630. The transceiver 610, the controller 620, and the storage 630 may be operated according to the above-described communication methods of the UE. Components of the UE are not limited to the above-described example. For example, the UE may include a larger or smaller number of components than the above-described components. Furthermore, the transceiver 610, the controller 620, and the storage 630 may be implemented in the form of a single chip.

The transceiver 610 refers to a UE receiver and a UE transmitter as a whole, and may transmit/receive signals with base stations, other UEs, and network entities. The signals transmitted/received with base stations may include control information and data. The transceiver 610 may receive, for example, system information, synchronization signals, or reference signals from the base station. To this end, the transceiver 610 may include an RF transmitter configured to up-convert and amplify the frequency of transmitted signals, an RF receiver configured to low-noise-amplify received signals and down-convert the frequency thereof, and the like. However, this is only an embodiment of the transceiver 610, and the components of the transceiver 610 are not limited to the RF transmitter and the RF receiver. Also, the transceiver 610 may include wired/wireless transceivers, and may include various components for transmitting/receiving signals. In addition, the transceiver 610 may receive signals through a radio channel, output the same to the controller 620, and transmit signals output from the controller 620 through the radio channel. Furthermore, the transceiver 610 may receive communication signals, output same to a processor, and transmit signals output from the processor to network entities through a wired/wireless network.

The storage 630 may store programs and data necessary for operations of the UE. In addition, the storage 630 may store control information or data included in signals acquired by the UE. The storage 630 may include storage media such as a ROM, a RAM, a hard disk, a CD-ROM, and a DVD, or a combination of storage media.

As used herein, the controller 620 may be defined as a circuit, an application specific integrated circuit, or at least one processor. The processor may include a communication processor (CP) which performs control for communication and an application processor (AP) which controls upper layers such as application programs. The controller 620 may control the overall operation of the UE according to the embodiments proposed in the disclosure. For example, the controller 620 may control signal flows between respective blocks so as to perform operations for receiving clock quality information.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

## Claims

1. A user equipment (UE) in a wireless communication system, the UE comprising:
a transceiver; and
a controller coupled to the transceiver,
wherein the controller is configured to:
receive, from a base station, a radio resource control (RRC) message including a first event identifier (ID) and information on a clock quality;
store the first event ID; and
receive, from the base station, a system information block (SIB) including a second event ID,
wherein the first event ID and the second event ID are associated with a timing synchronization status of the UE.

2. The UE of claim 1, wherein the controller is further configured to, in case that the stored first event ID is different from the second event ID, notify an upper layer of the UE that the information on the clock quality is changed.

3. The UE of claim 1, wherein the information on the clock quality includes at least one of an indicator for a clock quality acceptance, information on a synchronization status, information on a traceability to a coordinated universal time (UTC), information on a traceability to a global navigation satellite system (GNSS), information on a frequency stability, information on a clock accuracy, or a parent time source.

4. The UE of claim 1,
wherein the RRC message is a DLInformationTransfer message, and
wherein the SIB is SIB 9 associated with time information.

5. A base station in a wireless communication system, the base station comprising:
a transceiver; and
a controller coupled to the transceiver,
wherein the controller is configured to:
transmit, to a user equipment (UE), a radio resource control (RRC) message including a first event identifier (ID) and information on a clock quality, the first event ID being stored by the UE; and
transmit, to the UE, a system information block (SIB) including a second event ID,
wherein the first event ID and the second event ID are associated with a timing synchronization status of the UE.

6. The base station of claim 5, wherein, in case that the stored first event ID is different from the second event ID, an upper layer is notified that the information on the clock quality is changed.

7. The base station of claim 5, wherein the information on the clock quality includes at least one of an indicator for a clock quality acceptance, information on a synchronization status, information on a traceability to a coordinated universal time (UTC), information on a traceability to a global navigation satellite system (GNSS), information on a frequency stability, information on a clock accuracy, or a parent time source.

8. The base station of claim 5,
wherein the RRC message is a DLInformationTransfer message, and
wherein the SIB is SIB9 associated with time information.

9. A method performed by a user equipment (UE) in a wireless communication system, the method comprising:
receiving, from a base station, a radio resource control (RRC) message including a first event identifier (ID) and information on a clock quality;
storing the first event ID; and
receiving, from the base station, a system information block (SIB) including a second event ID,
wherein the first event ID and the second event ID are associated with timing synchronization status of the UE.

10. The method of claim 9, further comprising, in case that the stored first event ID is different from the second event ID, notifying an upper layer of the UE that the information on the clock quality is changed.

11. The method of claim 9, wherein the information on the clock quality includes at least one of an identifier for a clock quality acceptance, information on a synchronization status, information on a traceability to a coordinated universal time (UTC), information on a traceability to a global navigation satellite system (GNSS), information on a frequency stability, information on a clock accuracy, or a parent time source.

12. The method of claim 9,
wherein the RRC message is a DLInformationTransfer message, and
wherein the SIB is SIB9 associated with time information.

13. A method performed by a base station in a wireless communication system, the method comprising:
transmitting, to a user equipment (UE), a radio resource control (RRC) message including a first event identifier (ID) and information on a clock quality, the first event ID being stored by the UE; and
transmitting, to the UE, a system information block (SIB) including a second event ID,
wherein the first event ID and the second event ID are associated with a timing synchronization status of the UE.

14. The method of claim 13, wherein, in case that the stored first event ID is different from the second event ID, an upper layer is notified that the information on the clock quality is changed.

15. The method of claim 13, wherein the information on the clock quality includes at least one of an identifier for a clock quality acceptance, information on a synchronization status, information on a traceability to a coordinated universal time (UTC), information on a traceability to a global navigation satellite system (GNSS), information on a frequency stability, information on a clock accuracy, or a parent time source.
